# EUROPEAN PATENT APPLICATION

(11) **EP 2 434 049 A1**
(43) Date of publication of application: **28.03.2012**
(21) Application number: 11181627.8
(22) Date of filing: 16.09.2011
(51) Int. Cl.: D07B 1/06, B60C 9/16, B60C 9/20, B60C 15/04

(54) **Tire with high strength reinforcement**

(30) Priority: 22.09.2010 US 887751
(71) Applicant: The Goodyear Tire & Rubber Company, Akron, OH 44316-0001 (US)
(72) Inventor: Duval, Yann Bernard, L-7724 Walferdange (LU); Klinkenberg, Maurice Peter Catharina Jozef, L9188 Vichten (LU); Veneziani, Antonio, L-4407 Belvaux (LU)
(74) Representative: Kutsch, Bernd

(57) **Abstract**

A tire comprising a reinforcement structure comprising cords of a TRIPLEX steel is disclosed. The cords may have a 2 + 1 construction, a 2 x construction, a 2 + 2 construction or 5 x construction. The TRIPLEX steel is of the generic composition FeₓMn_{y}Al_{z}C containing 18-28 % manganese, 9-12 % aluminum, and 0.7 -1.2 % carbon (in mass %) and is composed of an austenitic γ-Fe(Mn, Al, C) solid solution matrix possessing a fine dispersion of nano-size K-carbides (Fe,Mn)₃AlC₁₋ₓand α-Fe(Al, Mn) ferrite of varying volume fractions.

## Description

### Field of the Invention

The present invention relates to a tire, preferably a pneumatic tire, comprising a reinforcement structure.

### Background of the Invention

Reinforced elastomeric articles are well known. For example, conveyor or like type belts, tires, etc., are constructed with cords of textile and/or fine steel wire filaments or strands. In particular, belts used in pneumatic tires are constructed of up to eight ply layers with the cord reinforcement of adjacent plies being biased with respect to the direction of movement of the tire where it is desired to reinforce in both the lateral direction and the direction of rotation of the tire. Further, cords made of strands of multi-twisted filaments of fine wire with a single strand construction having two or more filaments and a wrap filament thereabout to reinforce the cord structure are known.

In some cases, the reinforcement includes the use of single strand cords of multi-filaments which are not twisted about each other but rather twisted altogether as a bundle or bunch (bunched cord) to simplify the cord construction. Higher fatigue life requirements for composites in tires have resulted in cords with smaller filament diameter, requiring more filaments in the cord to obtain the necessary strength.

Conventional two ply tire belt structures for passenger and light truck tires may have cords of 2 x 0.255 ST and 2 + 2 x 0.32-0.40 ST, respectively. This designation means one cord of two 0.255 mm diameter filaments and one cord of four 0.32-0.40 mm diameter filaments (with two filaments twisted at a shorter lay length than the other two filaments), respectively. Multi-filament cords such as 2 + 2 x 0.32-0.40 ST have been found necessary to meet the higher demand for strength of composites in tire belts, such as in light truck applications. Both of these cords are made of super tensile (ST) steel as defined hereinafter. Though cord designs incorporating super tensile (ST) steel have proven effective, there is a continuing need to develop lighter weight cord constructions with improved characteristics, such as higher corrosion propagation resistance and improved tire performance, over conventional high tensile (HT) and super tensile (ST) constructions.

These conventional cord constructions generally have not found use in larger tires, such as off-the-road (OTR) tires. Large OTR tires conventionally use constructions such as 7 x 7 x 0.25 + 1 HT and 3 x 7 x 0.22 HT comprising seven strands each of seven 0.25 mm diameter high tensile (HT) filaments that are twisted together and spiral-wrapped; and three strands each of seven 0.22 mm diameter high tensile (HT) filaments that are twisted together, respectively. One conventional steel cord cable used for ply reinforcement in OTR tires for sizes 36R51 and larger is stranded cord of high tensile (HT) tire cord filament such as 7 x 19 x 0.20 + 1 HT cord comprising seven strands each of nineteen 0.20 mm diameter high tensile (HT) filaments that are twisted together and spiral-wrapped.

OTR tires may also be constructed of multiple belts or a single belt with reinforcing cords such as 27 x 0.265 ST or 5 + 8 + 14 x 0.265 + 1 ST. Still, conventional steel cord constructions have breaking load and cable gauge limitations preventing the needed design inch-strength from being achieved for tires larger than 40R57 used on trucks and earthmovers weighing up to and sometimes more than 320 tons. In addition, there is a need to increase the rivet area in the ply and belt, i.e., the space between the cords, for tire sizes of 36R51 and larger so that more rubber may penetrate between the cords during tire manufacture to enhance the quality of calendered treatment by preventing "weak rivet" or "loose coat" (which can result in trapped air in tires).

The higher strength steel alloys have resulted in changes in cord modulus giving rise to the possibility of adjusting the parameters of a tire belt gross load, which depends upon three factors assuming adequate cord to rubber adhesion. The factors are cord modulus, the ratio of cord volume to rubber volume (often expressed as the number of cord ends per 2.54 cm (epi)), and the angle of cord reinforcement. Further, as the angle of cord reinforcement approaches the direction of rotation of the tire, the support from the reinforcement in the lateral direction moves toward zero. An increase in the above-mentioned two other cord related factors, i.e., the cord modulus and the ratio of cord volume to rubber volume, generally results in an increase of weight for the belt. Added weight can mean added cost, higher rolling resistance, and lower fuel economy of a tire. Simply using lighter cords with a lower modulus does not solve the problem because, even though they have lower weight, the lower cord modulus must be offset by increasing the ratio of cord to rubber volume. This increase in cord volume is limited by the physical size of the cord and the resulting spacing between the cords, which governs the amount of rivet, i.e., the ability of the rubber to penetrate between the cords for good cord to rubber adhesion.

### Definitions

"Axial" and "axially" are used herein to refer to lines or directions that are parallel to the axis of rotation of the tire.
"Cable" means a cord formed by twisting together two or more plied yarns.
"Carcass" means the tire structure apart from the belt structure, tread, undertread, and sidewall rubber over the plies, but including the beads.
"Circumferential" means lines or directions extending along the perimeter of the surface of the annular tire parallel to the Equatorial Plane (EP) and perpendicular to the axial direction.
"Cord" means one of the reinforcement strands which a reinforcement structure of the tire comprises.
"Denier" means the weight in grams per 9000 meters (unit for expressing linear density). Dtex means the weight in grams per 10,000 meters.
"Density" means weight per unit length.
"Fabric" means a network of essentially unidirectionally extending cords, which may be twisted, and which in turn are composed of a plurality of a multiplicity of filaments (which may also be twisted) of a high modulus material.
"Fiber" is a unit of matter, either natural or man-made that forms the basic element of filaments. It has a length at least 100 times its diameter or width.
"Filament count" means the number of filaments that make up a yarn. Example: 1000 denier polyester has approximately 190 filaments.
"High Tensile Steel (HT)" means a carbon steel with a tensile strength of at least 3400 MPa @ 0.20 mm filament diameter.
"LASE" is load at specified elongation.
"Lateral" means an axial direction.
"Lay length" means the distance at which a twisted filament or strand travels to make a 360 degree rotation about another filament or strand.
"Mega Tensile Steel (MT)" means a carbon steel with a tensile strength of at least 4500 MPa @ 0.20 mm filament diameter.
"Normal Tensile Steel (NT)" means a carbon steel with a tensile strength of at least 2800 MPa @ 0.20 mm filament diameter.
"Ply" means a cord-reinforced layer of rubber-coated, preferably radially deployed or otherwise parallel, cords.
"Radial" and "radially" are used to mean directions radially toward or away from the axis of rotation of the tire.
"Rivet" means an open space between cords in a layer.
"Super Tensile Steel (ST)" means a carbon steel with a tensile strength of at least 3650 MPa @ 0.20 mm filament diameter.
"Tenacity" is stress expressed as force per unit linear density of the unstrained specimen (gm/tex or gm/denier).
"Tensile" is stress expressed in forces/cross-sectional area. Strength in psi=12,800 times specific gravity times tenacity in grams per denier.
"Ultra Tensile Steel (UT)" means a carbon steel with a tensile strength of at least 4000 MPa @ 0.20 mm filament diameter.
"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Summary of the Invention

The invention relates to a tire in accordance with claim 1.

Dependent claims refer to preferred embodiments of the invention.

In a preferred aspect of the invention, the tire is a pneumatic tire and includes a carcass structure, two sidewalls spaced apart a distance, two beads, a tread disposed radially outward of a crown of the carcass structure, a belt structure interposed radially between the carcass structure and the tread, and a reinforcement structure having cords of ferritic high aluminum TRIPLEX steel.

### Brief Description of the Drawings

FIG. 1 is a schematic representation of a cross section of an example embodiment of a pneumatic tire for use with the present invention;
FIG. 2 is a schematic representation of a partial cross section of a second example embodiment of a pneumatic tire for use with the present invention;
FIG. 3 is a schematic representation of a cross section of an example reinforcing cord in accordance with the present invention;
FIG. 4 is a schematic representation of a cross section of another example reinforcing cord in accordance with the present invention;
FIG. 5 is a schematic representation of a cross section of still another example reinforcing cord in accordance with the present invention;
FIG. 6 is a schematic representation of a cross section of yet another example reinforcing cord in accordance with the present invention;
FIG. 7 shows the stress strain curves of TRIP, TWIP, and TRIPLEX steels;
FIG. 8 represents the k-carbide lattice (unit k-carbide cell (L12 type));
FIG. 9 shows engineering stress-strain curves of thermally aged TRIPLEX alloy; and
FIG. 10 shows specific energy absorption (EV spec) of high Mn alloys and conventional deep drawing steels (crash modeling).

### Detailed Description of Example Embodiments of the Present Invention

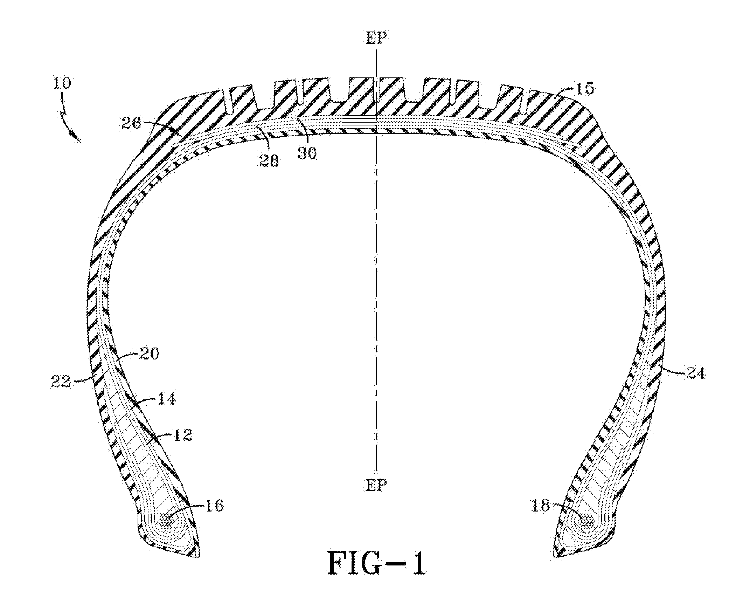

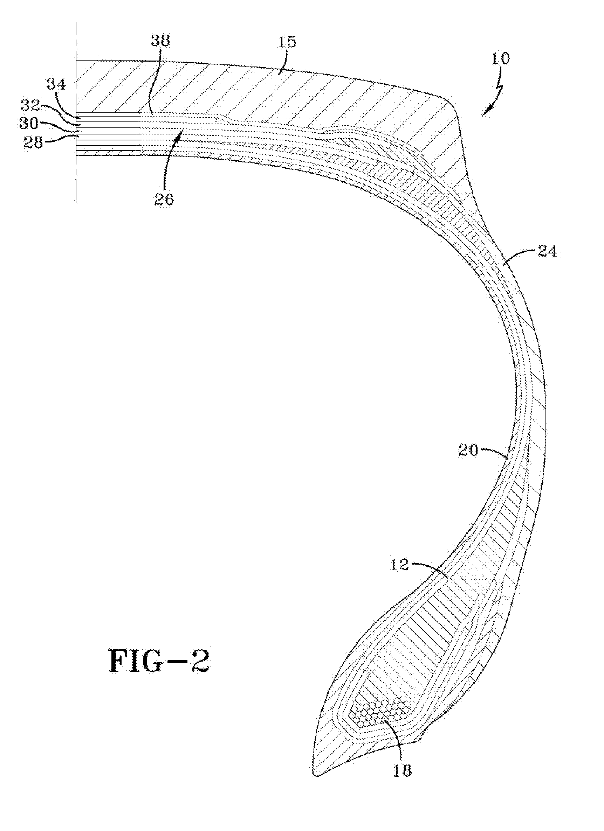

Referring to FIGS. 1 and 2, plies 12, 14 are shown within an example pneumatic tire 10 with a radial carcass wherein like elements have received like reference numerals. The example tire 10 has a radial ply carcass structure when the cords of the carcass reinforcing ply, or plies 12, 14 are oriented at angles in the range of 75° to 90° with respect to the equatorial plane (EP) of the example tire.

Either ply 12, 14 may be reinforced with the metallic cords, rayon, polyester, nylon, or any other suitable reinforcement. The metallic cord reinforced carcass ply 12 or 14 may have a layer of steel cords arranged so as to have from about 8 to about 20 ends per 2.54 cm (EPI) when measured in a tire circumferential direction at a location having a maximum width MW. For example, the layer of steel cords may be arranged so as to have about 12 to about 16 ends per 2.54 cm (EPI) at the location having the maximum width MW. In terms of metric units, the steel cords may be arranged as to have from 3 to 8 ends per cm (EPC) when measured in a tire circumferential direction at the location having a the tire maximum width MW. A high number of ends per inch may include the use of a lower diameter wire for a given strength versus a low number of ends per inch for a higher diameter wire for the same strength. Also, use of a monofilament of a given diameter may require more or less ends per inch depending on the strength of the monofilament wire.

The pneumatic tire 10 may have a pair of substantially inextensible annular beads 16, 18, which are axially spaced apart from one another. Each of the beads 16, 18 may be located in a bead portion of the pneumatic tire 10, which has exterior surfaces configured to be complimentary to the beads and retaining flanges of a rim (not shown) upon which the pneumatic tire is designed to be mounted. Plies 12, 14 may be of side-by-side reinforcing cords of polyester, steel, or other suitable material and extend between the beads 16, 18 with an axially outer portion of the carcass structure folded about each of the beads. The carcass ply structure of FIG. 1 comprises two plies 12, 14 of reinforcing material. One or more carcass plies of any suitable material may be employed.

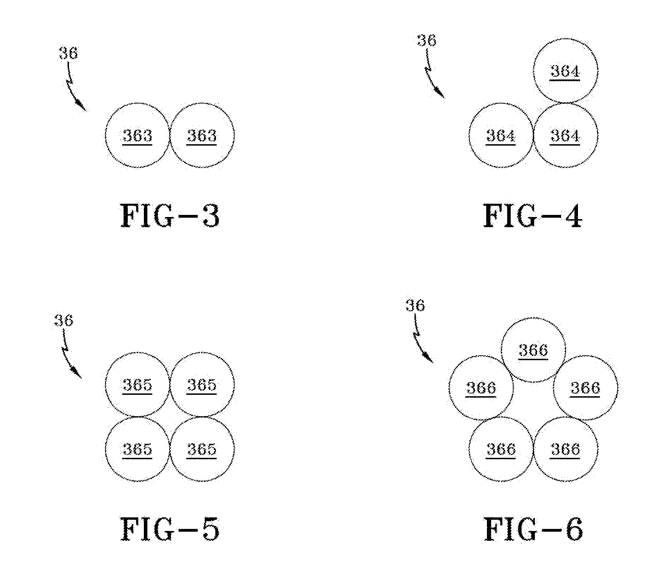

A layer of a low permeability material 20 may be disposed inwardly of the carcass plies 12, 14, and contiguous to an inflation chamber defined by the pneumatic tire 10 and rim. Elastomeric sidewalls 22, 24 may be disposed axially outward of the carcass structure 12, 14. A circumferentially extending belt structure 26 of two layers of belts 28, 30 (FIG. 1), or four layers of belts 28, 30, 32, 34 (FIG. 2), may include steel reinforcing cords 36 as shown in FIG. 3. The belt structure 26 may also include an overlay 38 interposed radially between the belts 28, 30, 32, 34 and the tread 15 (FIG. 2).

The belt structure 26 of FIGS. 1 and 2 may comprise the example cords 36 having filaments of Ultra Tensile Steel (UT) or Mega Tensile Steel (MT) (as defined above) with diameters in the range of 0.08 mm to 0.35 mm and appropriate lay lengths. For example, the cord 36 of FIG. 3 may have a construction of 2x filaments 363. The example cord 36 of FIG. 4 may have a construction of 2 + 1 filaments 364. The example cord 36 of FIG. 5 may have a construction of 2 + 2 filaments 365. The example cord 36 of FIG. 6 may have a construction of 5x filaments 366.

One example method of achieving UT strength may be the merging of the process as disclosed in US-A-4,960,473 with a carbon rod microalloyed with one or more of the following elements: Cr, Si, Mn, Ni, Cu, V and B. One example construction may be C 0.88 to 1.00, Mn 0.30 to 0.50, Si 0.10 to 0.30, Cr 0.10 to 0.40, V 0 to 0.10, Cu 0 to 0.50, Ni 0 to 0.50, and Co 0.20 to 0.10 with the balance being Fe and residuals. The resulting rod may then be drawn to a tensile strength equivalent to 4000 MPa @ 0.20 mm.

Example filaments of 0.30 mm to 0.35 mm diameter UT steel wire may have a cord breaking strength of at least 1,020 Newtons (N), plus or minus 5%. One example structure may have two filaments twisted together with a 16.0 mm lay length with these two filaments twisted at a 16.0 mm lay length together in the same twist direction with two other filaments which are untwisted and parallel to each other when twisted together with the twisted filaments. This example cord, a 2+2 construction (FIG. 5), may be designated as 2 + 2 x 30 UT or 2 + 2 x 35 UT. The 2 + 2 construction may exhibit openness and good rubber penetration resulting from the openness. The 0.30 and 0.35 designate the filament diameter in millimeters and the UT designates the material being ultra tensile steel.

The above examples of UT and MT cord structure may perform similar to higher gauge HT and ST steel constructions. Thus, when these example cord structures incorporate filaments having a smaller diameter than those of the HT and ST cord structures, the resulting reduction in gauge material and cost as compared with the HT and ST cord structures results in lighter weight and less costly tires.

Further, for equal filament diameters, the UT and MT cords have higher strength and generally higher fatigue life over the predecessor HT and ST cords. These advantages lead to elastomer products which have less reinforcement material and thus lower weight and cost. Additionally, the life of the product may be increased with the increase in fatigue life of such cords 36 and filaments 363, 364, 365, 366, as shown in US-A-7,082,978.

A parameter which may be varied in a reinforced composite of elastomer is the end count in end per 2.54 cm (EPI), i.e., the number of cords per unit length in the lateral direction to the direction in which the elastomer is being reinforced. The increased strength of the UT and MT samples may allow a reduction in EPI to achieve comparable strength. Alternatively, cord diameter may be reduced and the end count maintained or increased to achieve comparable strength. Further, a minimum rivet of 0.018" (0.46 mm) may be maintained to provide proper penetration of elastomers between embedded cords. The penetration may be further enhanced by smaller diameter and simpler (less filaments in a cord) cord constructions made achievable by UT and MT steel filaments.

UT constructions, such as those of FIGS. 3-6, with diameters, for example, of 0.185 mm or 0.21 mm, provide a lighter weight and less costly alternative for belt constructions of light tires. Further, the reduced weight and cost provide equal to better plant processability (calendering) as well as tire performance greater than conventional constructions.

As stated above, a belt structure 26 of UT or MT steel cords 36 produces excellent fatigue performance in a pneumatic tire 10 as well as allowing use of less material in the belt and other parts of the pneumatic tire 10. However, the use of TRIPLEX steel for reinforcement wires (i.e., in the beads, in one or more plies, in the belt, etc.) in a tire or pneumatic tire, in accordance with the present invention, would provide even greater advantages in tires, since a weight reduction can be achieved with TRIPLEX steel while maintaining equivalent strength characteristics. For example, a TRIPLEX steel bead bundle for an aircraft or truck tire would provide similar strength, but less weight.

Weight reduction of pneumatic tires is generally limited by a required minimum amount of material. However, with TRIPLEX steel, required strength may be achieved with less weight. For example, a truck tire with TRIPLEX steel beads may weigh 13% less, or 500 Grams less total tire weight.

With the properties of TRIPLEX steel, and the corresponding less weight, other benefits, such as reduced rolling resistance, may also be achieved in tires. High-strength, light weight TRIPLEX steels generally comprise the generic composition Fe-xMn-yAl-zC containing 18 - 28 % manganese, 9 - 12 % aluminum, and 0.7 - 1.2 % C (in mass %). The microstructure may be composed of an austenitic γ-Fe(Mn, Al, C) solid solution matrix possessing a fine dispersion of nano-size K-carbides (Fe,Mn)₃AlC₁₋ₓand α-Fe(Al, Mn) ferrite of varying volume fractions. The calculated Gibbs free energy of the phase transformation γ_{fcc} → E_{hc}p amounts to ΔG^{γ→E} = 1757 J/mol and the stacking fault energy was determined F_{SF} =110 mJ/m². Thus, the austenite is very stable and no strain induced e-martensite may be formed. Mechanical twinning is almost inhibited during plastic deformation. The TRIPLEX steels exhibit low density of 6.5 to 7.0 g/cm³ and superior mechanical properties, such as high strength of 700 to 1100 MPa and total elongations up to 60 % and more. The specific energy absorption achieved at high strain rates of 10³ s⁻¹ is 0.43 J/mm³. TEM investigations have revealed that homogeneous shear band formation, accompanied by dislocation glide, has occurred in deformed tensile samples. The dominant deformation mechanism of TRIPLEX steels is shear band induced plasticity (SIP effect) sustained by a uniform arrangement of nano-size K-carbides coherent to the austenitic matrix. The high flow stresses and tensile strengths are caused by effective solid solution hardening and superimposed dispersion strengthening.

Such ferritic, high aluminum steels provide pronounced reduction of the specific weight based on the high solubility of Al in the cubic centered iron lattice and the strong solid solution strengthening of about 40 MPa per wt % Al. Due to the formation of the k-phase below 400°C, the maximum Al content is restricted to about 6.5 wt %. At this Al content, the reduction of density is about 9%. The cold forming limit is widely expanded by micro alloying with B, Nb, and Ti metals to avoid embrittling carbides at grain boundaries.

In transformation induced plasticity (TRIP) and twinning induced plasticity (TWIP) steels, the density reduction may be achieved by alloying with the lightweight or lattice expanding Al and Si elements. High Mn contents between 15 and 30 wt % may stabilize the austenite. In the composition range from 1.5 to 4 wt % Al and Si, the stacking fault energies (SFE's) of the Mn-Al-Si-steels can vary to generate different deformation mechanisms: Transformation Induced Plasticity by martensitic transformation and Twinning Induced Plasticity.

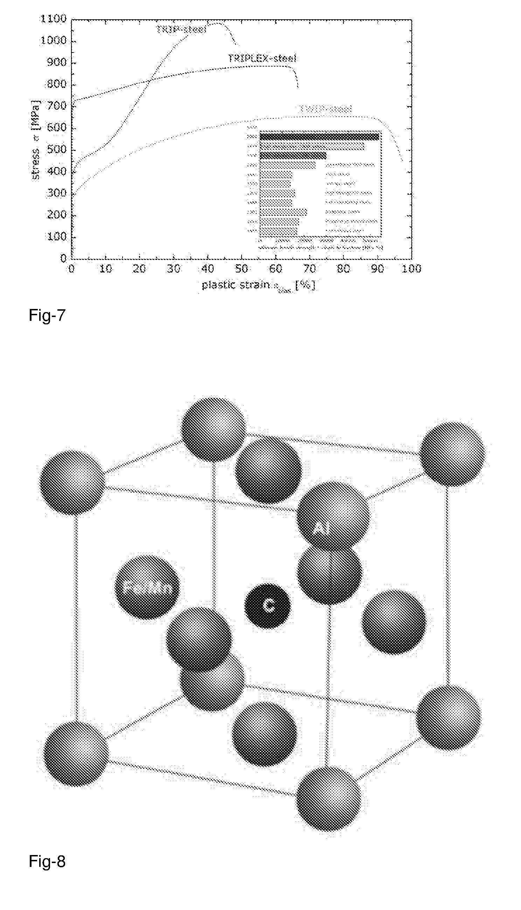

TRIPLEX steels on base of the quaternary Fe-Mn-Al-C construction combine the above presented alloy concepts. Such TRIPLEX steels possess about 15 % lower density, superior strength properties, improved corrosion behavior, and high tensile ductility in comparison with conventional deep drawing steels due to their chemistry, microstructure, deformation, and strengthening mechanisms. The TRIPLEX microstructure consists of austenite, ferrite, and nano-dispersed (Fe, Mn) 3Al-C k-carbides. The morphology and distribution of these carbides are strongly influenced by the alloying elements, although the thermal treatment may significantly affect their mechanical properties. Pronounced homogeneous shear-band formation causes Shear-band Induced Plasticity (SIP effect) and the high-strength properties are due to effective solid solution hardening and dislocation interactions in crossing shear bands. The extraordinary ductility and toughness of TRIPLEX steel, even under impact loading, promotes high energy absorption at very high strain rates (up to 103 s-1). Fig. 7 shows the stress strain curves of TRIP, TWIP, and TRIPLEX steels

Thus, high strength alloys constituted on the Fe-Mn-Al-C basis represent one of the high manganese alloys of a generation known as TRIPLEX, having the face centered cubic (FCC) microstructure, with predominantly 8% ferrite and 6-9 % nano-size k-carbides being dispersed in a FCC solid solution matrix.

TRIPLEX alloy consists of the FCC matrix characterized by annealing twins, about 8 % ferrite and nano-size k-carbides regularly distributed in the FCC matrix and having a regularly arranged FCC structure. For optimal properties, an additional aging application may be utilized thereby contributing to regular k-carbide precipitation demanded for subsequent realization of a specific deformation mechanism (SIP effect). Such TRIPLEX alloys may be resistant to e-martensite transformation. Namely, positive free enthalpy austenite decomposition into e-martensite (ΔGyγ→e = +1755 J.mol-1) is a reason for the high FCC matrix stability. Transformation into martensite is also suppressed due to relatively high stacking fault energy (SFE) being about 110 mJ/m². The high SFE level is also a reason for no mechanical twinning susceptibility of the TRIPLEX alloy. It has been found that the tendency toward the e-marternsite occurs when the SFE is lower than 15-20 mJ/m². The detected modification of the SFE level and e-marternsite transformation resistance (HCP crystallographic lattice) is cause by aluminum (Al) addition to the basic solid solution with manganese (Mn) thereby increasing the SFE and suppressing deformation twinning generally. Reduction of specific density occurs due to Al and Mn solubility levels in the FCC matrix and to Al's and Mn's higher atomic radius in comparison with iron's (Fe's) atomic radius. For example, in an alloy of 12% Al and 28% Mn, the FCC matrix density corresponds to the 6.5 g/cm³. General weight decreasing of the coexisting FCC and base centered cubic (BCC) phases in solid solution leads to a reduction of average molar weight of the alloy matrix and to a decreasing of unite cell molar density. The matrix lattice will be larger, resulting from the Al and Mn atomic radii (rAl = 0.147 nm, rMn = 0.134 nm) in comparison with the Fe atoms (rFe = 0.126 nm). Beside the basic FCC phase, the TRIPLEX microstructure may consist of ferrite (6-8%) and nano-size k-carbides precipitating in the FCC matrix and showing regular arrangement (see L12 below) with central situated C-atom. Unite cell may be expressed as (FeMn)3AlC. Average lattice parameter level a0 = 0.3857 nm and is mainly dependent on Al content in the alloy. The k-carbide lattice is represented in Fig. 8 (unit k-carbide cell (L12 type)).

Twinning deformation and martensite phase transformation realized in high manganese alloys may be replaced by uniformly arranged shear band formation on the {111} planes of highest density within the FCC matrix. These features represent an significant contribution to homogeneous shear deformation to the large plastic elongation known as the SIP-effect (shear band induced plasticity). Due to above given positive free enthalpy value (+1755 J/mol¹) for martensite transformation and due to relatively high SFE (approximately 110 mJ/m²), TRIPLEX alloys may not be prone to martensite transformation or to severe mechanical twinning.

The microstructural analysis of the k-carbide precipitation morphology demonstrates regular distribution of nano-size particles of this phase coherent to the FCC matrix. This finding confirms the important role of the above discussed k-carbides distribution in the FCC matrix by influence of the uniformly arranged shear bands contributing to the strengthening of the TRIPLEX alloy.

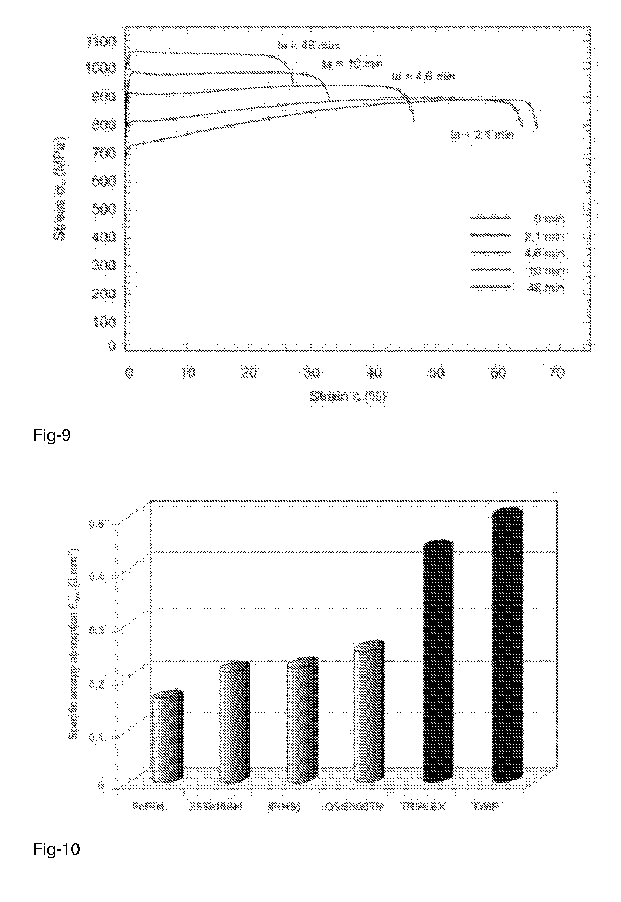

Engineering stress-strain curves of high Mn-Al TRIPLEX alloy at test temperatures between -100°C and 400°C illustrate distinct strain hardening and a different deformation mechanism in the temperature interval. The best plastic strain (εₚₗ) of about 53% was detected at 20°C (strength reached 1100 MPa). With the higher temperature, the εₚₗ increased along with strength (at 400°C for εₚₗ = 19 %, strength was 700 MPa). The lower test temperature was chosen, the higher stress level was reached along with the worst εₚₗ (at -100°C for εₚₗ = 37 % , the strength was 1260 MPa). Results are summarized in Table 1 below. In order to increase the mechanical characteristics in strength level without plastic response degradation, particularly, the investigated alloy is usually subjected to thermal aging at 550°C for different isothermal aging time between 2.1 min and 46 min. The results are summarized in Figure 9 in the form of engineering curves of aged samples. After prolonged aging time, the Rp (0.2) increase from 700 MPa to 1060 MPa is found (determined at room temperature). The presented stress - strain dependences most similar to those of an ideal elastic (plastic solid where virtually no strain hardening occurs). This demonstrates the desirability of uniform shearing for achieving extended plastic deformation realized by the moderate deformation hardening mechanism.

**Table I**

| Relationship between stress and strain values of TRIPLEX alloys in neck region (by tensile testing) | | |
|---|---|---|
| Testing temperature [°C] | Strength [MPa] | Plastic strain [%] |
| -100 | 1260 | 37 |
| 20 | 1100 | 53 |
| 200 | 850 | 44 |
| 400 | 700 | 19 |

Engineering stress-strain curves of thermally aged TRIPLEX alloy are demonstrated in Fig.9. Aging was realized at 550°C for different time intervals.

Specific energy absorption (EV spec) of high Mn alloys and conventional deep drawing steels (crash modeling) are shown in Fig. 10.

In Fig. 10, the specific energy absorptions (EVspec) defined as dissipative energy per unit volume at high strain rate of 102 - 103 s⁻¹ (at the conditions relevant to the crash modeling) of the chosen material types are compared. In the set of the evaluated steels and alloys, two variants of high Mn alloy and four steel types applied as deep drawing materials are indicated. The comparison shows the absorption energy of the conventional deep drawing steels is lower than the absorption level of TWIP and TRIPLEX alloys. The absorption capacity of these alloys is more than double in comparison with the considered deep drawing steel types. These higher absorption values of the above mentioned alloys reflect a higher stress flow and a beneficial plastic elongation level. In the TRIPLEX alloy, a significant role in the absorption capacity may be attributed to the effect of severe shear band formation at high strain rate.

The TRIPLEX alloy Fe-26/30Mn-10/12Al-0.9/1.2C mainly consists of the FCC microstructure with a dispersion of nano-size k-carbides (L12 above) and partially ordered α-ferrite. The chemical composition of the k-carbide is (FeMn)3AlC. The achieved superior properties of the TRIPLEX may be attributed to the effective solid solution and precipitation strengthening. High energy absorption level (EVspec) of the high Mn alloys represents the beneficial effect of Mn. Contribution of the deformation mechanism to the enhanced ductility is connected with the SIP-effect (shear band induced plasticity). The homogeneous shear band formation may be accompanied by dislocation glide. The realization of this mechanism depends on uniform arrangement formation of the nano-size k-carbides being coherent to the FCC matrix. The TRIPLEX alloy, due to its reduction in specific weight, high strength, and desirable formability including superior crash resistance, may have many applications, such as weight saving structures in pneumatic tires. For example, utilization of the TRIPLEX alloy for a bead bundle, especially for aircraft and trucks, may provide excellent results.

On a truck tire with TRIPLEX steel beads, the beads could weigh 13% less. This provides a savings of 500 gms, or more than one pound, of total tire weight. The lower density (about 15 %), superior strength properties, improved corrosion behavior, and high tensile ductility of TRIPLEX steel in comparison with conventional deep drawing steels (UT, MT) are provided by the specific chemistry, microstructures, deformation and strength mechanism of TRIPLEX steel.

As stated above, a bead structure 16, 18, ply structure 12, 14, or belt structure 26 with TRIPLEX steel cords 36 in accordance with the present invention produces a lighter weight pneumatic tire 10 without sacrificing strength. These structures 12, 14, 16, 18, 26 thus enhance the performance of the tire pneumatic 10, even though the complexities of the structure and behavior of the pneumatic tire are such that no complete and satisfactory theory has been propounded.

A pneumatic tire has certain essential structural elements. United States Department of Transportation, Mechanics of Pneumatic Tires, pages 207-208 (1981). An important structural element is the belt structure, typically made up of many cords of fine hard drawn steel or other metal embedded in, and bonded to, a matrix of low modulus polymeric material, usually natural or synthetic rubber. Id. at 207 through 208.

The belt structure cord characteristics affect the other components of a pneumatic tire (i.e., belt structure affects apex, carcass ply, overlay, etc.), leading to a number of components interrelating and interacting in such a way as to affect a group of functional properties (noise, handling, durability, comfort, high speed, and mass), resulting in a completely unpredictable and complex composite. Thus, changing one component can lead to directly improving or degrading many other functional characteristics, as well as altering the interaction between that one component and many other structural components. Each of those interactions may thereby indirectly improve or degrade those ten functional characteristics.

Only through extensive experimentation have the bead structure 16, 18, ply structure 12, 14, or belt structure 26 of TRIPLEX cords of the present invention been revealed as an excellent, unexpected, and unpredictable option for a pneumatic tire.

## Claims

1. A tire comprising a reinforcement structure comprising cords of a TRIPLEX steel.

2. The tire of claim 1 wherein the TRIPLEX steel is a ferritic high aluminum TRIPLEX steel.

3. The tire of claim 1 or 2 wherein the tire is a pneumatic tire comprising a carcass structure, two sidewalls (22, 24), two beads (16, 18), a tread (15) disposed radially outward of a crown of the carcass structure, and a belt structure (26) interposed radially between the carcass structure and the tread (15).

4. The tire of at least one of the previous claims wherein the cords comprises filaments with diameters in a range of from 0.18 mm to 0.22 mm.

5. The tire of at least one of the previous claims wherein the TRIPLEX steel cords are arranged such that they have from 8 to 20 ends per 2.54 cm.

6. The tire as set forth in claim 4 wherein the cords comprises 0.185 mm diameter filaments.

7. The tire as set forth in claim 4 wherein the cords comprises 0.21 mm diameter filaments.

8. The tire of at least one of the previous claims wherein the cords have a 2 + 1 construction.

9. The tire of at least one of the previous claims wherein the cords have a 2 x construction.

10. The tire of at least one of the previous claims wherein the cords have a 2 + 2 construction.

11. The tire of at least one of the previous claims wherein the cords have a 5 x construction.

12. The tire of at least one of the previous claims wherein the carcass structure comprises the reinforcement structure.

13. The tire of at least one of the previous claims wherein the beads comprise the reinforcement structure.

14. The tire of at least one of the previous claims wherein the belt structure comprises the reinforcement structure.

15. The tire of at least one of the previous claims wherein the TRIPLEX steel is of the generic composition FeₓMn_{y}Al_{z}C containing 18-28 % manganese, 9-12 % aluminum, and 0.7 -1.2 % carbon (in mass %) and/or wherein the TRIPLEX steel is composed of an austenitic γ-Fe(Mn, Al, C) solid solution matrix possessing a fine dispersion of nano-size K-carbides (Fe,Mn)₃AlC₁₋ₓand α-Fe(Al, Mn) ferrite of varying volume fractions.
